Europäisches Patentamt

(19) European Patent Office

Office européen des brevets

(11) Publication number: **0 000 806**
**B1**

(12) # EUROPEAN PATENT SPECIFICATION

(45) Date of publication of patent specification: **29.09.82**

(51) Int. Cl.³: **F 16 K 17/02, B 60 T 17/18**

(21) Application number: **78300144.9**

(22) Date of filing: **12.07.78**

(54) **Fluid pressure circuit protection valves.**

(30) Priority: **12.08.77 GB 3398177**

(43) Date of publication of application:
**21.02.79 Bulletin 79/4**

(45) Publication of the grant of the patent:
**29.09.82 Bulletin 82/39**

(84) Designated Contracting States:
**BE CH DE FR GB NL**

(56) References cited:
**DE - A - 2 355 456**
**DE - A - 2 356 423**
**DE - A - 2 525 146**
**DE - A - 2 553 818**
**DE - A - 2 558 844**
**DE - A - 2 639 721**
**FR - A - 2 149 920**
**FR - A - 2 150 995**
**FR - A - 2 190 652**
**GB - A - 1 474 373**

(73) Proprietor: **BENDIX LIMITED**
**Douglas Road**
**Kingswood, Bristol BS15 2NL (GB)**

(72) Inventor: **Dale, Robin John**
**Douglas Road**
**Kingswood Bristol, BS15 2NL (GB)**

(74) Representative: **Turner, Alan Reginald**
**c/o Bendix Limited Douglas Road**
**Kingswood, Bristol BS15 2NL (GB)**

Courier Press, Leamington Spa, England.

Fluid pressure circuit protection valves

This invention relates to fluid pressure circuit protection valves especially but not exclusively for use in fluid pressure reservoir charging systems.

Fluid pressure reservoir charging arrangements are used extensively in road vehicle braking systems wherein it is convenient to provide charging of a plurality of reservoirs from a single source of fluid pressure, typically a compressor. Such braking systems invariably have two service reservoirs for supply fluid pressure to completely independent service air brake circuits and in addition, a secondary or parking brake reservoir is usually provided on heavy vehicles for providing hold-off pressures for holding off spring brakes provided for secondary braking and parking. In addition, if a trailer is to be attached to the vehicle, a trailer brake reservoir will also be provided for applying fluid pressure to trailer brakes controlled by signals from the trailer.

In charging circuits for the respective reservoirs in such an arrangement it is usual to include charging circuit protection valves for the purposes of ensuring that if a failure occurs in the pipes or connections of a circuit connected to one reservoir, the remaining good circuits can nevertheless become charged at least to a working pressure. A problem exists in such an arrangement because of possible inequality between the strength of the springs employed in such protection valves. In normal production these may vary sufficiently for a protection valve associated with a faulty or leaking reservoir to permit the loss of an air supply to such an extent that the other non-faulty circuits do not become charged. In order to overcome such a problem, the DE—A—2553818 provides in parallel with each protection valve a check valve and a restricted flow path which will always ensure that a supply of air reaches non-faulty reservoir circuits despite a small amount of inequality of the springs of the protection valves. It will be appreciated that an accumulation of some air pressure in a non-faulty reservoir then permits any relevant difference in spring forces to be overcome by the established pressure acting on the relevant area of the protection valve.

Even with a system arranged with parallel restrictive passages such as described in the aforementioned DE—A—2553818, there is a problem which is not dealt with or solved by the said document. In such systems, again as a result of inequality of the springs of the protection valves or slightly different effective areas, a spring brake reservoir used for parking and secondary braking may become fully charged before the reservoir or reservoirs supplying the service brakes of the vehicle. As a result, the vehicle may be capable of having its parking brakes released whilst the service brake circuits, not having yet received their charged pressure, may be inoperable. It has also been proposed in DE—A—2,355,456 to provide the valve closure member of a multicircuit protection valve with two concentric annular portions the outer one of which is resilient and shallower than the inner one and the inner one of which is provided with a transverse passage. By virtue of the change of effective area which occurs as the pressure increases to a value at which the outer annular portion is unseated operating tolerances of the springs of multi-circuit protection valves are rendered uncritical. However there can be problems associated with the consistent manufacture of such closure members with annuli of precisely different heights.

It is an object of the invention to overcome the shortcomings of the prior proposals.

According to the present invention there is provided a fluid pressure operable fluid pressure circuit protection valve having an input port and an output port, a valve closure member engageable with a valve seat to close a connection between said ports, biassing means for biassing the closure member against the valve seat, pressure responsive means operable in response to a predetermined pressure at the input port to counteract the biassing means and unseat the closure member, characterised by the closure member having an annular resilient seating portion provided with a transverse cut, the uncounteracted biassing means biassing the closure member being operable in use to deform the transverse cut to substantively close it and increasing fluid pressure at the input port acting to progressively open the transverse cut for fluid flow to the output port prior to lifting of the closure member off the valve seat.

By virtue of the present invention, there can be provided a reservoir charging arrangement for a multi-circuit brake system which by employing such a protection valve for one or some of a plurality of reservoirs to be charged from a single source, it is ensured that one or some reservoirs are normally assured of becoming charged prior to others.

In order that the invention may be more clearly understood and readily carried into effect, the same will be further described by way of example with reference to the accompanying drawings of which:—

Fig. 1 illustrates a typical reservoir charging arrangement for a vehicle braking system and

Fig. 2 illustrates a circuit protection valve (cutaway view) embodying protection valves in accordance with the invention and

Fig. 3 illustrates an alternative form of protection valve formed in accordance with the invention, and

Fig. 4 shows an enlarged view of the plunger of the protection valve of Fig. 2.

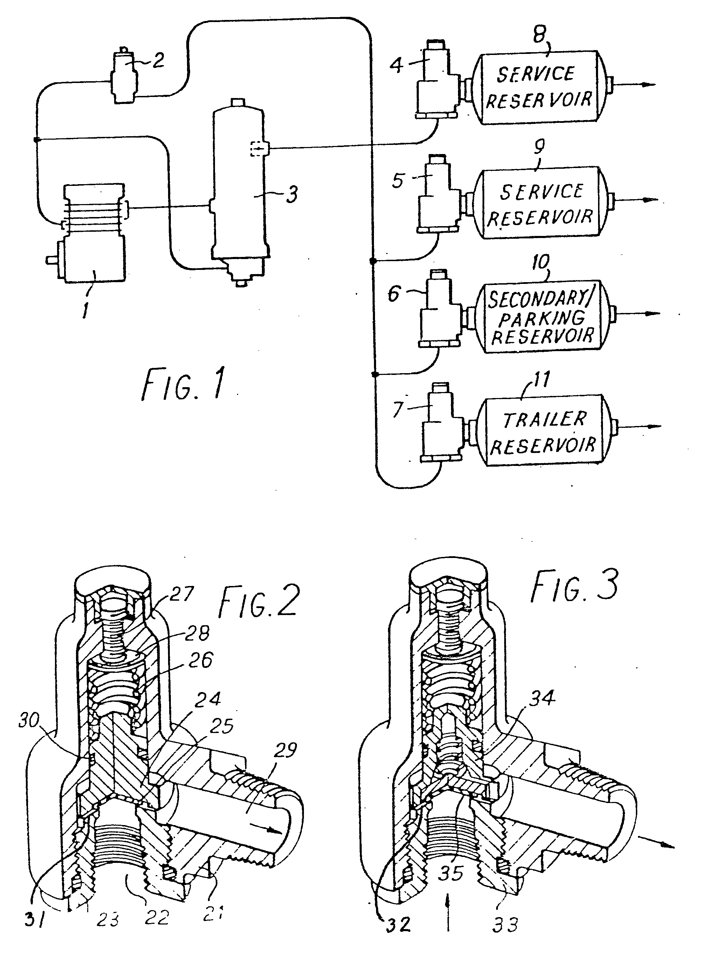

Referring to Fig. 1, the reservoir charging arrangement shown therein comprises a compressor to be driven by the internal combustion engine of the vehicle in which the arrangement is installed as part of the braking system. The compressor denoted by reference 1 is controlled by a governor denoted by reference 2 and the output of the compressor is fed to an air dryer 3 of known form, the output of which is connected in common to the supply ports of four single circuit protection valves denoted by references 4, 5, 6 and 7. These protection valves precede reservoirs 8, 9, 10 and 11. The reservoirs 8 and 9 are service reservoirs, the outputs of which would be connected to respective sides of a driver's dual circuit foot valve. The reservoir 10 comprises the secondary or parking air reservoir, the output of which would be to a manually operable spring and parking brake control valve in the cab of the vehicle. The reservoir 11 comprises the trailer reservoir source, the output of which would be connected to trailer relay valves for providing supplies to a trailer when connected to the vehicle.

The protection valves 4 and 5 are valves as shown in Fig. 2. From the cutaway illustration of Fig. 2, the construction of the valve is clearly visible and it will be seen that it comprises a main body denoted by reference 21 having a supply input port 22 in a screw insert 23 providing a valve seat 31 against which a springloaded valve closure member 24 engages through its resilient seat 25. Spring biassing is provided by spring 26, the thrust of which is adjustable by a suitable screw 27 bearing against a pressure plate 28. The output port is denoted by reference 29.

In operation of the protection valve, when the air pressure at the supply input port attains a pressure which is sufficient to overcome the spring 26, the member 24 lifts off seat 31 and the supply pressure then acts upon the full area of the stem of 24 embraced by the sliding seal 30, holding the member 24 raised against the effect of the spring. Should a failure in the circuit which is connected to the delivery port occur, the valve closes to support a pressure typically about $0,4 . 10^6$ Pa (60 p.s.i.) at the input port and any remaining circuits connected to the same source of supply are assured of an air supply not less than this pressure.

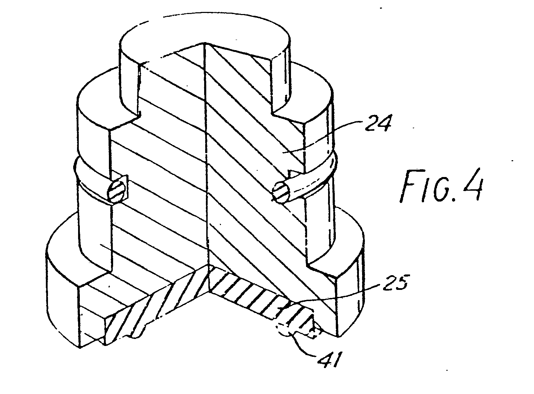

In order to ensure that the service reservoirs 8 and 9 of the circuit arrangement of Fig. 1 are given charging preference, the resilient seat 25 of the protection valve of Fig. 2 is provided as shown in Fig. 4 with a contacting upstanding annular raised portion, having a passage cut across it which for pressures somewhat below the aforesaid $0,4 . 10^6$ Pa (60 p.s.i.) provides a restricted flow path through the valve.

For pressures progressively less than a certain pressure, the cut in the resilient raised portion of the valve seat becomes progressively closed owing to the effect of the spring 26 causing compression of the resilient raised portion. With the spring entirely uncounteracted, the valve operates to completely seal the connection between the supply port 22 and the output port 29. Since the protection valves 6 and 7 are not provided with such restricted flow paths, it is always ensured that the reservoirs 8 and 9 are charged preferentially when re-charging of a discharged system is commencing.

An alternative form of protection valve is shown in Fig. 3, and this is very similar to the valve of Fig. 2 with the added feature that an additional check valve with a light spring is provided within the central plunger, and now denoted by reference 34. In this case, the central check valve has a resilient closure member 35 and again the upstanding annular portion of the seat 35 which bears against a hard valve seat 32 provided on the upper surface of a screw member 33, is provided with a transverse cut such that at intermediate pressures as aforesaid, a restricted flow path is provided across the check valve.

The reason for the added check valve in the valve of Fig. 3 is to inhibit feedback as between one reservoir and another. In this connection, it will be noted that with a reservoir such as the service reservoir 8 connected to the supply via a protection valve such as shown in Fig. 2, with a fully charged reservoir, the plunger 24 is raised and a loss of pressure in one or other of the other reservoirs can be replenished to a certain extent by reverse flow from the reservoir 8 to the depleted reservoir. In the case of the valve of Fig. 3 however, by virtue of the central check valve 35, even though the plunger 34 is raised under the effect of a fully charged reservoir pressure at the delivery port fed via a slot to the underside of the plunger 34, the check valve 35 remains closed when a depression of the pressure at the supply port occurs, thereby preventing appreciable feed-back from one reservoir to another.

Typically, whilst the valves 4 and 5 of the arrangement of Fig. 1 may be of the type described with reference to Fig. 2, such as to provide the possibility of feedback, it may be desirable to provide valves not permitting feedback for the protection valves 6 and 7. In general, the question as to whether one or more of the protection valves 8, 9, 10 or 11 are required to prevent feedback will depend upon the vehicle builder requirements.

The protection valves 4, 5, 6 and 7 may all be constructed in a single metal casting instead of as single valves.

From the foregoing it will be appreciated that by virtue of the present invention and whereby the protection valves of a multi-circuit braking system which are provided in the charging paths for reservoirs for the or each service braking circuit, it can be ensured that during recharging of the system, a parking spring brake reservoir does not become recharged before a service reservoir to an extent which can permit release of a parking brake. This is achievable even in cases where the spring of a spring brake protection reservoir is slightly less effective than the spring of a service reservoir due to manufacturing tolerances.

## Claims

1. A fluid pressure operable fluid pressure circuit protection valve having an input port (22) and an output port (29) a valve closure member (24) engageable with a valve seat (31, 32) to close a connection between said ports, biassing means (26) for biassing the closure member against the valve seat, pressure responsive means operable in response to a predetermined pressure at the input port to counteract the biassing means and unseat the closure member, characterised by the closure member (24) having an annular resilient seating portion (25) provided with a transverse cut (41), the uncounteracted biassing means biassing the closure member being operable in use to deform the transverse cut to substantively close it and increasing fluid pressure at the input port (22) acting to progressively open the transverse cut for fluid flow to the output port (29) prior to lifting of the closure member off the valve seat (32).

2. A fluid pressure operable fluid pressure protection valve as claimed in claim 1 characterised by being included in a charging system for a service brake reservoir (8) of a vehicle braking system wherein a spring brake reservoir (10) is charged from the same source (1) via a protection valve (6) not having a said transverse cut whereby charging of the service reservoir (8) is preferential.

## Revendications

1. Soupape de protection d'un circuit de fluide sous pression fonctionnant sous la pression du fluide, comportant un orifice d'entrée (22) et un orifice de sortie (29), un organe de fermeture à soupape (24) pouvant s'engager sur un siège de soupape (31, 32) afin de fermer un passage de raccordement entre lesdits orifices, un organe de contrainte (26) pour contraindre ledit organe de fermeture à s'appliquer sur le siège de soupape, un organe sensible à la pression fonctionnant en réponse à une pression prédéterminée à l'orifice d'entrée pour réagir contre ledit organe de contrainte et décoller l'organe de fermeture, caractérisé par le fait que l'organe de fermeture (24) comporte un siège élastique annulaire (25) muni d'une fente transversale (41), l'organe de contrainte sans réaction contraignant l'organe de fermeture pouvant fonctionner en service pour déformer la fente transversale afin essentiellement de la refermer et d'augmenter la pression du liquide à l'orifice d'entrée (22) de manière à ouvrir progressivement la fente transversale pour laisser le fluide s'écouler vers l'orifice de sortie (29) avant le décollement de l'organe de fermeture du siège de soupape (31, 32).

2. Soupape de protection, conforme à la revendication 1, caractérisée par le fait qu'elle est incorporée dans un circuit de charge de réservoir de frein de service (8) d'un circuit de freinage pour véhicule où le réservoir du frein à ressort (10) est chargé par la même source (1) par l'intermédiaire d'une soupape de protection (6) ne comportant pas ladite fente transversale, ce qui fait que le chargement du réservoir de service (8) est préférentiel.

## Patentansprüche

1. Sicherheitsventil für ein mit einem strömungsfähigen Medium beschicktes Drucksystem, mit einer Einlassöffnung (22) und einer Auslassöffnung (29), einem Ventilverschlussorgan (24), das mit einem Ventilsitz (31, 32) zusammenwirkt, um die Verbindung zwischen den beiden Oeffnungen zu verschliessen, mit Vorspannmitteln (26), um das Verschlussorgan (24) gegen den Ventilsitz zu drücken, sowie mit einem druckabhängigen Steuerorgan, welches auf einen vorbestimmten, an der Einlassöffnung herrschenden Druck anspricht und das Verschlussorgan entgegen der Rückstellwirkung der Vorspannmittel von seinem Sitz abhebt, dadurch gekennzeichnet, dass das Verschlussglied (24) einen ringförmigen, nachgiebigen Sitzabschnitt (25) mit einem querverlaufenden Einschnitt (41) aufweist, wobei die in ihrer Strecklage befindlichen Vorspannmittel des Verschlussorgans im Betrieb den querverlaufenden Einschnitt verformen und praktisch verschliessen können, wobei ein Anstieg des an der Einlassöffnung (22) herrschenden Mediumdrucks den querverlaufenden Einschnitt nach und nach öffnet, so dass das Medium zur Auslassöffnung (29) strömen kann, bevor das Verschlussorgan vom Ventilsitz (31, 32) abgehoben wird.

2. Sicherheitsventil nach Anspruch 1, dadurch gekennzeichnet, dass es in einem System zur Druckbeaufschlagung eines Betriebsbremsbehälters (8) einer Fahrzeugbremsanlage Verwendung findet, wobei ein Federbremsbehälter (10) von der gleichen Quelle (1) über ein Sicherheitsventil (6) beaufschlagt wird, das den genannten querverlaufenden Einschnitt nicht aufweist und die Beaufschlagung des Betriebsbehälters (8) den Vorrang hat.

FIG. 1

SERVICE RESERVOIR 8

SERVICE RESERVOIR 9

SECONDARY/ PARKING RESERVOIR 10

TRAILER RESERVOIR 11

FIG. 2

FIG. 3

FIG.4